# EUROPEAN PATENT APPLICATION

(11) **EP 4 644 495 A1**
(43) Date of publication of application: **05.11.2025**
(21) Application number: 24792331.1
(22) Date of filing: 06.02.2024
(51) Int. Cl.: C09D 11/30

(54) **ACTIVE RAY-CURABLE INK COMPOSITION FOR INKJET PRINTING**

(30) Priority: 17.04.2023 JP 2023067189
(71) Applicant: Sakata INX Corporation, Osaka-shi, Osaka 541-0047 (JP)
(72) Inventor: OGASAHARA, Koki, Osaka-shi, Osaka 541-0047 (JP); FUKE, Kazuhiro, Osaka-shi, Osaka 541-0047 (JP); KINJOH, Jun, Osaka-shi, Osaka 541-0047 (JP); NAKASHIMA, Okinori, Osaka-shi, Osaka 541-0047 (JP)
(74) Representative: Botti & Ferrari S.p.A.
(86) International application number: PCT/JP2024/003879
(87) International publication number: WO 2024/219055

(57) **Abstract**

Provided is an active ray-curable ink composition for inkjet printing, which is capable of reducing a gloss difference between a low coverage rate area and a high coverage rate area and is excellent not only in curability but also in the recoatability when applying a varnish composition on a coating film to be obtained. An active ray-curable ink composition for inkjet printing, comprising: a polymerizable compound; a polymerization initiator; and a gelling agent, wherein a wetting index of a cured coating film to be formed by inkjet printing is 40 mN/m or more.

## Description

### TECHNICAL FIELD

The present invention relates to an active ray-curable ink composition for inkjet printing. More specifically, the present invention relates to an active ray-curable ink composition for inkjet printing, which is capable of reducing a gloss difference between a low coverage rate area and a high coverage rate area and is excellent not only in curability but also in the recoatability when applying a varnish composition on a coating film to be obtained.

### BACKGROUND ART

Hitherto, a printed matter of an ultraviolet-curable inkjet ink has a large gloss difference between a low coverage rate area and a high coverage rate area, particularly in a single-pass application. Thus, as a technology for reducing the gloss difference, there have been known a method using an extender pigment (silica, alumina) of 1 µm or more and a method of producing a low-gloss printed matter with use of a gelling agent such as fatty acid amide (for example, Patent Document 1).

### PRIOR ART DOCUMENT

### Patent Document

Patent Document 1: JP 2012-40760 A

### SUMMARY OF THE INVENTION

However, the method using an extender pigment is liable to cause degradation in ejection stability if an extender pigment having a relatively large particle size is used in a high-resolution inkjet printer. Moreover, the method described in Patent Document 1 may cause floating of a gelling agent on a print surface, which is liable to cause pinholes or repellency when applying varnish in post-processing.

The present invention has been made in view of such problem in the related art, and has an object to provide an active ray-curable ink composition for inkjet printing, which is capable of reducing a gloss difference between a low coverage rate area and a high coverage rate area and is excellent not only in curability but also in the recoatability when applying a varnish composition on a coating film to be obtained.

An active ray-curable ink composition for inkjet printing according to an aspect of the present invention that solves the above-mentioned problem is an active ray-curable ink composition for inkjet printing, comprising: a polymerizable compound; a polymerization initiator; and a gelling agent, wherein a wetting index of a cured coating film to be formed by inkjet printing is 40 mN/m or more.

### EMBODIMENT FOR CARRYING OUT THE INVENTION

### <Active Ray-curable Ink Composition for Inkjet Printing>

An active ray-curable ink composition for inkjet printing (hereinafter also referred to as "ink composition") according to an embodiment of the present invention contains a polymerizable compound, a polymerization initiator, and a gelling agent. A wetting index of a cured coating film to be formed by inkjet printing is 40 mN/m or more. In the following, each of the components is described.

### (Colorant)

The ink composition of the present embodiment may contain a colorant (pigment). The pigment is not particularly limited. Examples of the pigment include various types of organic pigments and inorganic pigments.

Examples of the organic pigments include dye lake pigments, and azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based pigments.

Examples of the inorganic pigments include colored pigments such as titanium oxide, Bengala, antimony red, cadmium yellow, cobalt blue, ultramarine blue, navy blue, iron black, chromium oxide green, carbon black, and graphite (including achromatic colored pigments such as white and black), and extender pigments such as calcium carbonate, kaolin, clay, barium sulfate, aluminum hydroxide, and talc.

Specific examples of pigments for each representative hue of the ink composition of the present embodiment are as follows. Examples of a yellow pigment include C.I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, and 213, with C.I. Pigment Yellow 150, 155, 180, and 213 being preferred.

Examples of a magenta pigment include C.I. Pigment Red 5, 7, 12, 19, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, and 270, and C.I. Pigment Violet 19, with C.I. Pigment Red 122 and 202 and Pigment Violet 19 being preferred.

Examples of a cyan pigment include C.I. Pigment Blue 1, 2, 3, 15, 15:1, 15:2, 15:3, 15:4, 15:6, 16, 18, 22, 27, 29, and 60, with C.I. Pigment Blue 15:4 being preferred.

Examples of a black pigment include carbon black (C.I. Pigment Black 7).

A content of the pigment is not particularly limited. For example, the content of the pigment in the ink composition is preferably 0.5 mass% or more, more preferably 2 mass% or more. Moreover, the content of the pigment in the ink composition is preferably 20 mass% or less, more preferably 10 mass% or less. With the content of the pigment falling within the above-mentioned ranges, the ink composition is excellent in color reproducibility.

The ink composition of the present embodiment may contain a pigment dispersant. The pigment dispersant is not particularly limited. Examples of the pigment dispersant include carbodiimide-based dispersants, polyester amine-based dispersants, fatty acid amine-based dispersants, modified polyacrylate-based dispersants, modified polyurethane-based dispersants, multi-chain polymeric nonionic dispersants, and polymeric ionic surfactants.

When the pigment dispersant is blended, in view of increasing the dispersibility of the pigment and the storage stability of the ink composition, a content of the pigment dispersant with respect to the pigment is preferably 1.0 mass% to 100 mass%, more preferably 5.0 mass% to 60.0 mass%.

It should be noted that, even when the extender pigment is not contained, the ink composition of the present embodiment may decrease the gloss difference between a low coverage rate area and a high coverage rate area in a printed matter to be obtained. Thus, the extender pigment is not essentially required, and is not always required to be contained.

When the extender pigment is contained, the extender pigment is not particularly limited. Examples of the extender pigment include clay, talc, mica, kaolinite (kaolin), barium sulfate, magnesium sulfate, calcium carbonate, silicon oxide, aluminum oxide, bentonite, heavy calcium carbonate, barium carbonate, zirconia, and alumina.

When the particle size of the extender pigment is large, the gross difference of a printed matter to be obtained may be large. Thus, an average particle size of the extender pigment is preferably 0.001 µm to 0.2 µm, more preferably 0.01 µm to 0.1 µm.

When the extender pigment is contained, a content of the extender pigment is not particularly limited. For example, the content of the extender pigment in the ink composition is preferably more than 0 mass%, more preferably 1 mass% or more. Moreover, the extender pigment may be contained to such an extent that the ink ejection performance is not impaired.

### (Polymerizable Compound)

As the polymerizable compound, a known polymerizable compound that is generally used in an active ray-curable inkjet ink composition may be used. For example, the polymerizable compound is a monomer, an oligomer, or the like having a photopolymerizable unsaturated bond.

Examples of a monomer having one photopolymerizable unsaturated bond include: alkyl methacrylates or acrylates such as methyl methacrylate, butyl methacrylate, 2-ethylhexyl methacrylate, methyl acrylate, butyl acrylate, and 2-ethylhexyl acrylate; aralkyl methacrylates or acrylates such as benzyl methacrylate and benzyl acrylate; alcoxyalkyl methacrylates or acrylates such as butoxyethyl methacrylate and butoxyethyl acrylate; aminoalkyl methacrylates or acrylates such as N,N-dimethylaminoethyl methacrylate and N,N-dimethylaminoethyl acrylate; methacrylic esters or acrylic esters of polyalkylene glycol monoalkyl ethers such as diethylene glycol monoethyl ether, triethylene glycol monobutyl ether, and dipropylene glycol monomethyl ether; methacrylic esters or acrylic esters of polyalkylene glycol monoaryl ethers such as hexaethylene glycol monophenyl ether; isobornyl methacrylate or acrylate; glycerol methacrylate or acrylate; and 2-hydroxyethyl methacrylate or acrylate.

Examples of a monomer having two or more photopolymerizable unsaturated bonds include bisphenol A dimethacrylate, 1,4-butanediol dimethacrylate, 1,3-butylene glycol dimethacrylate, diethylene glycol dimethacrylate, glycerol dimethacrylate, neopentyl glycol dimethacrylate, polyethylene glycol dimethacrylate, polypropylene glycol dimethacrylate, tetraethylene glycol dimethacrylate, trimethylolpropane trimethacrylate, pentaerythritol trimethacrylate, pentaerythritol tetramethacrylate, dipentaerythritol tetramethacrylate, dipentaerythritol hexamethacrylate, dipentaerythritol pentamethacrylate, bisphenol A diacrylate, 1,4-butanediol diacrylate, 1,3-butylene glycol diacrylate, diethylene glycol diacrylate, glycerol diacrylate, neopentyl glycol diacrylate, polyethylene glycol diacrylate, polypropylene glycol diacrylate, tetraethylene glycol diacrylate, trimethylolpropane triacrylate, pentaerythritol triacrylate, pentaerythritol tetraacrylate, dipentaerythritol tetraacrylate, dipentaerythritol hexaacrylate, and dipentaerythritol pentaacrylate.

The oligomer having a photopolymerizable unsaturated bond is, for example, an oligomer obtained by suitably polymerizing the above-mentioned monomer.

A content of the photopolymerizable compound is not particularly limited. For example, the content of the photopolymerizable compound may be suitably determined in consideration of cured coating film physical properties.

### (Polymerization Initiator)

The polymerization initiator is not particularly limited. Examples of the polymerization initiator include benzoin ether-based photopolymerization initiators, acetophenone-based photopolymerization initiators, α-ketol-based photopolymerization initiators, aromatic sulfonyl chloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, triazine-based photopolymerization initiators, and acylphosphine oxide-based photopolymerization initiators.

A content of the polymerization initiator is not particularly limited. For example, the content of the polymerization initiator in the ink composition is preferably 3 mass% or more, more preferably 4 mass% or more. Moreover, the content of the polymerization initiator in the ink composition is preferably 15 mass% or less, more preferably 10 mass% or less. With the content of the polymerization initiator falling within the above-mentioned ranges, the ink composition is likely to have a sufficient external curability and a sufficient internal curability.

### (Gelling Agent)

The gelling agent is not particularly limited. For example, the gelling agent preferably contains at least any one of a fatty acid ester having a C12-C18 hydrocarbon chain or a fatty acid amide having a C12-C18 hydrocarbon chain.

The fatty acid ester having a C12-C18 hydrocarbon chain is not particularly limited. Examples of the fatty acid ester having a C12-C18 hydrocarbon chain include ester-based hydrocarbons such as glycol distearate, isopropyl myristate, isopropyl palmitate, octyldodecyl myristate, octyl palmitate, isooctyl palmitate, octyl stearate, isooctyl stearate, butyl stearate, myristyl myristate, stearyl stearate, isopropyl isostearate, 2-hexyldecyl isostearate, propylene glycol isostearate, octyl isopalmitate, and polyglyceryl monoisostearate; and sorbitan fatty acid esters such as sorbitan monolaurate, sorbitan monoisostearate, and sorbitan tristearate.

The fatty acid amide having a C12-C18 hydrocarbon chain is not particularly limited. Examples of the fatty acid amide include n-stearyloleamide, stearamide, and ricinoleamide.

Among those described above, the gelling agent preferably has two or more C12-C18 hydrocarbon chains. Accordingly, a coating film to be obtained is more likely to be reduced in the gloss difference between a low coverage rate area and a high coverage rate area.

A melting point of the gelling agent is preferably 36°C or higher. Moreover, the melting point of the gelling agent is more preferably 67°C or lower. With the melting point falling within the above-mentioned range, the ink composition is excellent in ejection stability, for example, when producing a printed matter with the use of an inkjet printing apparatus having a print head adjusted to a temperature range of 35°C to 60°C.

A content of the gelling agent is preferably 2 mass% or more, more preferably 5 mass% or more. Moreover, the content of the gelling agent is preferably 15 mass% or less, more preferably 12 mass% or less. With the content of the gelling agent falling within the above-mentioned ranges, the ink composition is more likely to be suppressed in the gloss difference between a low coverage rate area and a high coverage rate area in a printed matter to be obtained.

### (Optional Components)

The ink composition of the present embodiment may contain the following components in addition to the above-mentioned components, as appropriate.

### · Sensitizer

The sensitizer is not particularly limited. For example, the sensitizer is preferably an anthracene-based sensitizer, a thioxanthone-based sensitizer, or the like, more preferably a thioxanthone-based sensitizer. Specifically, examples of the sensitizer include anthracene-based sensitizers such as 9,10-dibutoxyanthracene, 9,10-diethoxyanthracene, 9,10-dipropoxyanthracene, and 9,10-bis(2-ethylhexyloxy)anthracene, and thioxanthone-based sensitizers such as 2,4-diethylthioxanthone, 2-isopropylthioxanthone, and 4-isopropylthioxanthone. Representative commercially available products include DBA and DEA (manufactured by Kawasaki Kasei Chemicals Ltd.) as anthracene-based sensitizers, and DETX and ITX (manufactured by Lambson Ltd.) as thioxanthone-based sensitizers.

When the sensitizer is contained, a content of the sensitizer is not particularly limited. For example, the content of the sensitizer in the ink composition is preferably 0.5 mass% or more, more preferably 0.8 mass% or more. Moreover, the content of the sensitizer in the ink composition is preferably 3 mass% or less, more preferably 2 mass% or less. With the content of the sensitizer falling within the above-mentioned ranges, there is an advantage that a color change over time of a cured coating film of the ink composition can be suppressed.

### · Polymerization Inhibitor

The polymerization inhibitor is not particularly limited. Examples of the polymerization inhibitor include phenolic compounds such as butylhydroxytoluene, tocopherol acetate, nitrosamine, benzotriazole, and hindered amine.

When the polymerization inhibitor is contained, a content of the polymerization inhibitor is not particularly limited. For example, the content of the polymerization inhibitor with respect to 100 parts by mass of a polymerizable component is preferably 0.5 parts by mass or more, more preferably 0.8 parts by mass or more. Moreover, the content of the polymerization inhibitor with respect to 100 parts by mass of the polymerizable component is preferably 2.0 parts by mass or less, more preferably 1.2 parts by mass or less. With the content of the polymerization inhibitor falling within the above-mentioned ranges, an increase in the viscosity of the ink composition due to a progress of a polymerization reaction during storage can be suppressed.

### · Ultraviolet Absorber

Examples of the ultraviolet absorber include benzophenone-based ultraviolet absorbers, benzotriazole-based ultraviolet absorbers, salicylate-based ultraviolet absorbers, hydroxyphenyltriazine-based ultraviolet absorbers, cyanoacrylate-based ultraviolet absorbers, and nickel complex-based ultraviolet absorbers.

When the ultraviolet absorber is contained, a content of the ultraviolet absorber may be adjusted as appropriate.

### · Antioxidant

Examples of the antioxidant include phenolic antioxidants, amine-based antioxidants, sulfur-based antioxidants, and phosphorus-based antioxidants.

When the antioxidant is contained, a content of the antioxidant is adjusted as appropriate.

### · Leveling Agent

Examples of the leveling agent include nonionic surfactants, cationic surfactants, anionic surfactants, and betaine surfactants.

When the leveling agent is contained, a content of the leveling agent is not particularly limited. For example, in view of improving the ejection stability of the ink composition from an inkjet head, the content of the leveling agent in the ink composition is preferably 0.005 mass% or more, more preferably 0.01 mass% or more. Moreover, the content of the leveling agent in the ink composition is preferably 1.5 mass% or less, more preferably 1 mass% or less.

In the ink composition of the present embodiment, a wetting index of a cured coating film to be formed by inkjet printing is 40 mN/m or more. When the wetting index is less than 40 mN/m, a coating film to be obtained is poor in the recoatability when applying a varnish composition, which is liable to cause pinholes or repellency. The wetting index can be measured by preparing various wetting index standard indicators manufactured by Wako Pure Chemical Corporation, ranging from 22.7 dyn/cm to 70 dyn/cm, in accordance with JIS K 6768, applying the indicators to a cured coating film surface with a cotton swab, and determining the level immediately before the index at which repellency occurs.

In the view point of improving the ejection stability of the ink composition, the viscosity of the ink composition of the present embodiment at 45°C is preferably 100 mPa·s or less, more preferably 50 mPa·s or less, still more preferably 20 mPa·s or less. Moreover, the viscosity of the ink composition at 45°C is preferably 1 mPa·s or more, more preferably 5 mPa·s or more. The viscosity of the ink composition may be designed so as to be adapted to inkjet apparatus. In the present embodiment, the viscosity can be measured using an E-type viscometer (RE100L viscometer, manufactured by TOKISANGYO) under the conditions of 45°C and 20 rpm.

The ink composition of the present embodiment is capable of reducing the gloss difference between a low coverage rate area and a high coverage rate area on a coating film to be obtained. The gloss difference can be evaluated by measuring a gloss value of a cured coating film in a 100% coverage rate area of each ink composition printed on coated paper (OK Topcoat) using a gloss meter (glossmeter, manufactured by BYK) in an environment of 25°C. In the present embodiment, the gloss value is preferably 60 or less.

As described above, according to the present embodiment, the ink composition is excellent in curability. Moreover, a coating film to be obtained is reduced in the gloss difference between a low coverage rate area and a high coverage rate area.

The varnish composition is not particularly limited. Examples of the varnish composition include AC Coat V-181, which is aqueous varnish manufactured by Sakata Inx Corporation.

Moreover, in addition to the curability and the effect of reducing the gloss difference, since the coating film of the ink composition of the present embodiment has a wetting index of 40 mN/m or more, the coating film is less liable to cause the pinholes or repellency even when the above-mentioned varnish composition is applied, and hence is excellent in recoatability.

### <Preparation Method for Ink Composition>

A method for preparing the ink composition of the present embodiment is not particularly limited. For example, the ink composition can be prepared by dispersing and mixing with use of a disperser such as a wet circulation mill, a bead mill, a ball mill, a sand mill, an attritor, a roll mill, a DCP mill, an agitator, a Henschel mixer, a colloid mill, an ultrasonic homogenizer, a high-pressure homogenizer (for example, a microfluidizer, a nanomizer, an ultimizer, Genus PY, or DeBEE 2000), or a pearl mill.

### <Manufacturing Method for Printed Matter, and Printed Matter>

A manufacturing method for a printed matter of an embodiment of the present invention includes a step of ejecting the above-mentioned composition onto a substrate from an inkjet printing apparatus.

The substrate is not particularly limited. Examples of the substrate include a plastic substrate, paper, metal foil, wood, and fabric. The plastic substrate is a substrate made of one or more selected from the group consisting of polyester-based polymers (for example, polyethylene terephthalate (PET) and polyethylene naphthalate), cellulose-based polymers (for example, diacetyl cellulose and triacetyl cellulose (TAC)), polycarbonate-based polymers, polyacrylic polymers (for example, polymethyl methacrylate), vinyl chloride-based polymers, polyolefin-based polymers (for example, polyethylene, polypropylene, polyolefin polymers having a cyclic or norbornene structure, and ethylene/propylene copolymer polymers), polyamide-based polymers (for example, nylon and aromatic polyamide polymers), polystyrene-based polymers (for example, polystyrene and acrylonitrile/styrene copolymer polymers), polyimide-based polymers, polysulfone-based polymers, polyethersulfone-based polymers, polyetherketone-based polymers, polyphenyl sulfide-based polymers, polyvinyl alcohol-based polymers, polyvinylidene chloride-based polymers, polyvinyl butyral-based polymers, polyarylate-based polymers, polyoxymethylene-based polymers, and polyepoxy-based polymers, and blends of those polymers.

The inkjet printing apparatus is an apparatus configured to supply an ink composition to a print head, eject the ink composition from the print head to the printed substrate such that the coating film has an appropriate thickness, and thereafter expose the ink composition hit on the substrate to an active ray to cure the ink composition. Examples of the active ray include an ultraviolet ray, an electron beam, and a visible ray emitted from a light-emitting diode (LED) any of various types of lamps, an electrode, or the like.

A coating film to be obtained in the manner described above is reduced in the gloss difference between a low coverage rate area and a high coverage rate area and is also excellent in the recoatability when applying a varnish composition.

Description has been given above of an embodiment of the present invention. The present invention is not especially limited to the above-mentioned embodiment. The above-mentioned embodiment mainly describes the invention having the following configuration.
(1) An active ray-curable ink composition for inkjet printing, comprising: a polymerizable compound; a polymerization initiator; and a gelling agent, wherein a wetting index of a cured coating film to be formed by inkjet printing is 40 mN/m or more.
   With such a configuration, the active ray-curable ink composition for inkjet printing is excellent in curability. Moreover, a coating film to be obtained is reduced in the gloss difference between a low coverage rate area and a high coverage rate area and is also excellent in the recoatability when applying a varnish composition.
(2) The active ray-curable ink composition for inkjet printing according to the item (1), wherein the gelling agent contains at least any one of a fatty acid ester having a C12-C18 hydrocarbon chain or a fatty acid amide having a C12-C18 hydrocarbon chain, and wherein two C12-C18 hydrocarbon chains are included in a molecule.
   With such a configuration, a coating film to be obtained is more likely to be reduced in the gloss difference between a low coverage rate area and a high coverage rate area.
(3) The active ray-curable ink composition for inkjet printing according to the item (1) or (2), wherein a content of the gelling agent is 2 mass% or more.

With such a configuration, a coating film to be obtained is more likely to be reduced in the gloss difference between a low coverage rate area and a high coverage rate area.

### EXAMPLE

Now, the present invention is more specifically described with Examples. The present invention is not limited to those Examples. Unless otherwise particularly limited, "%" corresponds to "mass%", and "parts" corresponds to "parts by mass".

Raw materials used and a preparation method are given below.
(Colorant (Pigment))
   P.Y. 155 Pigment Yellow 155
   P.R. 122 Pigment Red 122
   PB15:4 Pigment Blue 15:4
   P.Bk. 7 Pigment Black 7
(Pigment Dispersant)
   SS32000 (copolymer containing basic functional groups (amine value: 31.2 mgKOH/g), manufactured by Lubrizol Japan Limited)
   SS56000 (copolymer containing basic functional groups (amine value: 39.0 mgKOH/g), manufactured by Lubrizol Japan Limited)
(Polymerizable Compound)
   CN371NS (amine-modified oligomer, polyfunctional monomer, manufactured by Sartomer, Inc.)
   ACMO (acryloylmorpholine, acrylamide skeleton-containing monomer (monofunctional), manufactured by KJ Chemicals Corporation)
   DMAA (N,N-dimethylacrylamide, acrylamide skeleton-containing monomer (monofunctional), manufactured by KJ Chemicals Corporation)
   4HBA (4-hydroxybutyl acrylate, monofunctional monomer, manufactured by Osaka Organic Chemical Industry Ltd.)
   V190 (ethyl carbitol acrylate, monofunctional monomer, manufactured by Osaka Organic Chemical Industry Ltd.)
   HDDA (1,6-hexanediol diacrylate, polyfunctional monomer, manufactured by Osaka Organic Chemical Industry Ltd.)
   Aronix M-933 (high hydroxyl value pentaerythritol acrylate, polyfunctional monomer, manufactured by Toagosei Co., Ltd.)
(Gelling Agent)
   Exceparl MY-M (myristyl myristate, melting point 36°C to 46°C, manufactured by Kao Chemicals)
   Exceparl SS (stearyl stearate, melting point 56°C to 66°C, manufactured by Kao Chemicals)
   Emanon 3201M-V (glycol distearate, melting point 60°C to 65°C, manufactured by Kao Chemicals)
   Nikka Amide SO (n-stearyloleamide, melting point 67°C, manufactured by Mitsubishi Chemical Corporation)
   Excel P-40 (glycerin fatty acid ester, melting point 56°C to 60°C, manufactured by Kao Chemicals)
   Excel S-95 (glycerol monostearate, melting point 65°C to 70°C, manufactured by Kao Chemicals)
   Fatty Acid Amide T (stearamide, melting point 97°C to 102°C, manufactured by Kao Chemicals)
   Diamid L200 (erucamide, melting point 80°C, manufactured by Mitsubishi Chemical Corporation)
   Diamid O-200T (oleamide, melting point 70°C to 75°C, manufactured by Mitsubishi Chemical Corporation)
   Diamid Y (lauramide, melting point 99°C, manufactured by Mitsubishi Chemical Corporation)
(Polymerization Initiator)
   TPO (2,4,6-trimethylbenzoyl-diphenyl-phosphine oxide, manufactured by Lambson Ltd.)
   TPOL (ethoxy(2,4,6-trimethylbenzoyl)phenylphosphine oxide)
   BAPO (bis(2,4,6-trimethylbenzoyl)-diphenylphosphine oxide)
(Sensitizer)
   DETX (diethylthioxanthone, manufactured by Lambson Ltd.)
(Polymerization Inhibitor)
   UV22 (quinone polymerization inhibitor, manufactured by Kromachem Ltd.)
(Surface Modifier (Leveling Agent))
   BYK-377 (polyether-modified silicone-based surfactant, manufactured by BYK Chemie GmbH)

### <Examples 1 to 13 and Comparative Examples 1 to 7>

According to the formulations in Tables 1 and 2 (where the blending ratio of each material is shown by the unit of mass%), each material was stirred and mixed to obtain active ray-curable ink compositions for inkjet printing of Examples 1 to 13 and Comparative examples 1 to 7. The following evaluations were performed using the obtained ink compositions. The results are shown in Tables 1 and 2.

**Table 1**

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Pigment | P.Y.155 | - | - | - | - | - | - | - | - | - | 3.00% | - | - | - |
| | P.R.122 | 5.00% | 5.00% | 5.00% | 5.00% | 5.00% | 5.00% | 5.00% | 5.00% | 5.00% | - | - | - | - |
| | P.B. 15:4 | - | - | - | - | - | - | - | - | - | - | 2.00% | - | - |
| | P.Bk.7 | - | - | - | - | - | - | - | - | - | - | - | 2.00% | - |
| Pigment dispersant | SS32000 | 2.00% | 2.00% | 2.00% | 2.00% | 2.00% | 2.00% | 2.00% | 2.00% | 2.00% | 1.20% | - | - | - |
| | SS56000 | - | - | - | - | - | - | - | - | - | - | 0.80% | 0.80% | - |
| Polimerizable compound | CN371NS | 0.50% | 0.50% | 0.50% | 0.50% | 0.50% | 0.50% | 0.50% | 0.50% | 0.50% | 0.50% | 0.50% | 0.50% | 0.50% |
| | ACMO | 20.00 % | 20.00 % | 20.00 % | 20.00 % | 20.00 % | 20.00 % | 20.00 % | 20.00 % | 20.00 % | 20.00 % | 20.00 % | 20.00 % | 20.00 % |
| | DMAA | 9.00% | 9.00% | 9.00% | 9.00% | 9.00% | 5.00% | 9.00% | 9.00% | 9.00% | 9.00% | 9.00% | 9.00% | 9.00% |
| | 4HBA | 11.00 % | 11.00 % | 14.00 % | 6.00% | 1.00% | - | 11.00 % | 11.00 % | 11.00 % | 8.80% | 10.20 % | 10.20 % | 13.00 % |
| | V190 | 9.00% | 9.00% | 9.00% | 9.00% | 9.00% | 9.00% | 9.00% | 9.00% | 9.00% | 9.00% | 9.00% | 9.00% | 9.00% |
| | HDDA | 20.00 % | 20.00 % | 20.00 % | 20.00 % | 20.00 % | 20.00 % | 20.00 % | 20.00 % | 20.00 % | 20.00 % | 20.00 % | 20.00 % | 20.00 % |
| | Aronix M-933 | 9.00% | 9.00% | 9.00% | 9.00% | 9.00% | 9.00% | 9.00% | 9.00% | 9.00% | 9.00% | 9.00% | 9.00% | 9.00% |
| Gelling agent | Exceparl MY-M | 5.00% | 5.00% | 2.00% | 10.00 % | 15.00 % | 20.00 % | - | - | - | 10.00 % | 10.00 % | 10.00 % | 10.00 % |
| | Exceparl SS | - | - | - | - | - | - | 5.00% | - | - | - | - | - | - |
| | Emanon 3201M-V | - | - | - | - | - | - | - | 5.00% | - | - | - | - | - |
| | Nikka Amide SO | - | - | - | - | - | - | - | - | 5.00% | - | - | - | - |
| Initiator | TPO | 5.00% | - | - | - | - | - | - | - | - | - | - | - | - |
| | TPOL | - | 5.00% | 5.00% | 5.00% | 5.00% | 5.00% | 5.00% | 5.00% | 5.00% | 5.00% | 5.00% | 5.00% | 5.00% |
| | BAPO | 1.70% | 1.70% | 1.70% | 1.70% | 1.70% | 1.70% | 1.70% | 1.70% | 1.70% | 1.70% | 1.70% | 1.70% | 1.70% |
| Sensitizer | DETX | 2.00% | 2.00% | 2.00% | 2.00% | 2.00% | 2.00% | 2.00% | 2.00% | 2.00% | 2.00% | 2.00% | 2.00% | 2.00% |
| Polymerization inhibitor | UV22 | 0.40% | 0.40% | 0.40% | 0.40% | 0.40% | 0.40% | 0.40% | 0.40% | 0.40% | 0.40% | 0.40% | 0.40% | 0.40% |
| Leveling agent | BYK-377 | 0.40% | 0.40% | 0.40% | 0.40% | 0.40% | 0.40% | 0.40% | 0.40% | 0.40% | 0.40% | 0.40% | 0.40% | 0.40% |
| Total | | 100.0 % | 100.0 % | 100.0 % | 100.0 % | 100.0 % | 100.0 % | 100.0 % | 100.0 % | 100.0 % | 100.0 % | 100.0 % | 100.0 % | 100.0 % |
| Gloss value | | 23.0 | 23.0 | 60.0 | 11.8 | 6.2 | 3.2 | 5.7 | 16.3 | 14.6 | 13.0 | 12.0 | 14.0 | 13.5 |
| Recoatability | | ○ | ○ | ○ | ○ | ○ | ○ | ○ | ○ | ○ | ○ | ○ | ○ | ○ |
| LED curability | | ○ | ○ | ○ | ○ | ○ | ○ | ○ | ○ | ○ | ○ | ○ | ○ | ○ |

**Table 2**

| | | Comparative example | | | | | | |
|---|---|---|---|---|---|---|---|---|
| | | 1 | 2 | 3 | 4 | 5 | 6 | 7 |
| Pigment | P.R.122 | 5.00% | 5.00% | 5.00% | 5.00% | 5.00% | 5.00% | 5.00% |
| Pigment dispersant | SS32000 | 2.00% | 2.00% | 2.00% | 2.00% | 2.00% | 2.00% | 2.00% |
| Polimerizable compound | CN371NS | 0.50% | 0.50% | 0.50% | 0.50% | 0.50% | 0.50% | 0.50% |
| | ACMO | 20.00% | 20.00% | 20.00% | 20.00% | 20.00% | 20.00% | 20.00% |
| | DMAA | 9.00% | 9.00% | 9.00% | 9.00% | 9.00% | 9.00% | 9.00% |
| | 4HBA | 16.00% | 11.00% | 11.00% | 11.00% | 11.00% | 11.00% | 11.00% |
| | V190 | 9.00% | 9.00% | 9.00% | 9.00% | 9.00% | 9.00% | 9.00% |
| | HDDA | 20.00% | 20.00% | 20.00% | 20.00% | 20.00% | 20.00% | 20.00% |
| | Aronix M-933 | 9.00% | 9.00% | 9.00% | 9.00% | 9.00% | 9.00% | 9.00% |
| Gelling agent | Excel P-40 | - | 5.00% | - | - | - | - | - |
| | Excel S-95 | - | - | 5.00% | - | - | - | - |
| | Fatty Acid Amide T | - | - | - | 5.00% | - | - | - |
| | Diamid L200 | - | - | - | - | 5.00% | - | - |
| | Diamid O-200T | - | - | - | - | - | 5.00% | - |
| | Diamid Y | - | - | - | - | - | - | 5.00% |
| Initiator | TPOL | 5.00% | 5.00% | 5.00% | 5.00% | 5.00% | 5.00% | 5.00% |
| | BAPO | 1.70% | 1.70% | 1.70% | 1.70% | 1.70% | 1.70% | 1.70% |
| | DETX | 2.00% | 2.00% | 2.00% | 2.00% | 2.00% | 2.00% | 2.00% |
| Polymerization inhibitor | UV22 | 0.40% | 0.40% | 0.40% | 0.40% | 0.40% | 0.40% | 0.40% |
| Leveling agent | BYK-377 | 0.40% | 0.40% | 0.40% | 0.40% | 0.40% | 0.40% | 0.40% |
| Total | | 100.0% | 100.0% | 100.0% | 100.0% | 100.0% | 100.0% | 100.0% |
| Gloss value | | 100.0 | 15.7 | 68.4 | 3.3 | 3.2 | 64.4 | 9.4 |
| Recoatability | | ○ | × | × | × | × | × | × |
| LED curability | | ○ | ○ | ○ | ○ | ○ | ○ | ○ |

### <LED Curability>

Under the environment of 40°C, the ink composition was applied to coat paper (OK Topcoat) using a #4 bar coater. Irradiation was performed with a UV-LED light lamp manufactured by Phoseon Technology until the surface became tack-free, under the irradiation conditions of a distance of 2 cm between the lamp and the ink application surface and an irradiation time of 1 second per irradiation (integrated UV light intensity of 60 mJ/cm² per second), and the number of irradiations was evaluated according to the following evaluation criteria.

### (Evaluation Criteria)

○: The number of irradiations was 1.
×: The number of irradiations was 2 or more.

### <Gloss Value>

The ink composition was printed using a UV inkjet printing evaluation device (600 dpi, droplet volume (5 pL to 50 pL)) equipped with a Ricoh GEN6 head at a print head temperature of 45°C, and a coating film was prepared by LED curing in the same manner as described above. The gloss value of the cured coating film was measured using a gloss meter (glossmeter, manufactured by BYK), and evaluated according to the following evaluation criteria.

### (Evaluation Criteria)

○: The gloss value was 60 or less.
×: The gloss value was more than 60.

### <Recoatability>

The ink composition was printed using a UV inkjet printing evaluation device (600 dpi, droplet volume (5 pL to 50 pL)) equipped with a Ricoh GEN6 head at a print head temperature of 45°C, and a coating film was **prepared** by LED curing in the same manner as described above. The wetting index of the obtained coating film was measured in accordance with JIS-K6768, and evaluated according to the following evaluation criteria. In the case where the wetting index is 40 mN/m or more, when the varnish manufactured by Sakata Inx Corporation (aqueous varnish, AC Coat V-181) is applied with a bar coater, it can be determined as having no repellency and being excellent in recoatability.

### (Evaluation Criteria)

○: The wetting index was 40 mN/m or more.
×: The wetting index was less than 40 mN/m.

As shown in Table 1 and Table 2, the ink compositions of Examples 1 to 13 of the present invention were excellent in curability. Moreover, the obtained coating films had a small gloss difference and were excellent in recoatability.

## Claims

1. An active ray-curable ink composition for inkjet printing, comprising:
a polymerizable compound;
a polymerization initiator; and
a gelling agent,
wherein a wetting index of a cured coating film to be formed by inkjet printing is 40 mN/m or more.

2. The active ray-curable ink composition for inkjet printing according to Claim 1,
wherein the gelling agent contains at least any one of a fatty acid ester having a C12-C18 hydrocarbon chain or a fatty acid amide having a C12-C18 hydrocarbon chain, and
wherein two C12-C18 hydrocarbon chains are included in a molecule.

3. The active ray-curable ink composition for inkjet printing according to Claim 1 or 2, wherein a content of the gelling agent is 2 mass% or more.
